(19) Europäisches Patentamt

European Patent Office

Office européen des brevets

(11) Veröffentlichungsnummer: **0 172 839**
**B1**

(12) **EUROPÄISCHE PATENTSCHRIFT**

(45) Veröffentlichungstag der Patentschrift: **16.05.90**

(21) Anmeldenummer: **85900640.5**

(22) Anmeldetag: **19.01.85**

(86) Internationale Anmeldenummer:
**PCT/DE85/00014**

(87) Internationale Veröffentlichungsnummer:
**WO 85/03842 12.09.85 Gazette 85/20**

(51) Int. Cl.⁵: **A 01 G 1/00, E 02 D 17/20**

(54) **VEGETATIONSKÖRPER.**

(30) Priorität: **07.03.84 DE 3408698**

(43) Veröffentlichungstag der Anmeldung:
**05.03.86 Patentblatt 86/10**

(45) Bekanntmachung des Hinweises auf die
Patenterteilung:
**16.05.90 Patentblatt 90/20**

(84) Benannte Vertragsstaaten:
**AT BE CH DE FR GB LI LU NL SE**

(56) Entgegenhaltungen:
**EP-A-0 047 365**
**EP-A-0 100 374**
**DE-A-1 801 460**
**DE-A-2 321 362**
**DE-A-2 335 685**
**GB-A-1 526 348**

(73) Patentinhaber: **Behrens, Wolfgang**
**Trespenmoor 25**
**D-2833 Gross Ippener (DE)**

(72) Erfinder: **Behrens, Wolfgang**
**Trespenmoor 25**
**D-2833 Gross Ippener (DE)**

(74) Vertreter: **Thömen, Uwe, Dipl.-Ing.**
**Patentanwalt U. Thömen Zeppelinstrasse 5**
**D-3000 Hannover 1 (DE)**

Courier Press, Leamington Spa, England.

## Beschreibung

Die Erfindung betrifft einen Vegetationskörper gemöp dem Oberbegriff des Patentanspruches 1 und des Patentanspruches 8. Außerdem befaßt sich die Erfindung mit einem Substrat nach dem Oberbegriff des Anspruchs 9.

Es besteht schon seit längerer Zeit ein erhebliches allgemeines Bedürfnis an Vegetationskörpern der obigen Gattung, denen mit zunehmenden Umweltbewußtsein und zunehmender Erkenntnis der positiven Eigenschaften von künstlichen Begrünungen eine immer größere Bedeutung zukommt. Allerdings stehen den gewünschten Anwendungen der Vegetationskörper in der Praxis noch hemmemde Nach teile entgegen.

Bekanntlich gibt es bereits Vegetationskörper in Form von Rasenmatten, nachfolgend auch - wie allgemein üblich als - Rollrasen bezeichnet, der als vorkultivierter Vegetationskörper anzusehen ist. In der täglichen Praxis hat sich nun gezeigt, daß der Rollrasen in vielen Fällen dein gestellten Anforderungen nicht genügen kann.

Ein wesentliches Merkmal des Rollrasens ist der Umstand, daß er nicht selbsttragend ist und daher leicht in der Fläche auseinanderreißen kann. Dies ist vor allem in, solchen Anwendungsfällen zu beobachten, in denen der Rollrasen nicht in einer waagerechten, sondern in einer schrägen oder sogar vertikal hängenden Lage verwendet werden soll. In solchen Fällen ist die durch die Wurzeln vorhandene gewisse Armierung nicht für einen stabilen Halt ausreichend, so daß der Rollrasen leicht auseinanderreißen kann. Hieran ändert auch eine etwa vorhandene Schlingmatte nichts, da das Gewicht des Rollrasens wegen des benötigten Mutterbodens sowie die nur geringfügige Armierung aufgrund der Wurzeln dazu beitragen, daß der Rollrasen zerreißen kann. Dessen bevorzugtes Anwendungsgebiet ist somit ausschließlich auf waagerechte Flächen beschränkt.

Ein weiterer Nachteil hängt mit dem schon erwähnten Mutterboden zusammen, der für den Rollrasen unerläßlich ist. Wegen des benötigten Mutterbodens ist der Rollrasen aber für sogenannte extreme Standorte nicht geeignet. Damit scheidet ein weiteres bedeutendes Anwendungsgebiet aus. So ist es beispielsweise nicht ohne weiteres möglich, den Rollrasen als äußere Oberfläche bei Lärmschutzwänden oder Mauerbauwerke schlechthin zu benutzen, denn hier steht nicht der biologisch optimale Gesichtspunkt im Vordergrund, vielmehr sind solche künstlich geschaffenen Bauwerke an beliebigen Stellen - also auch an extremen wasserarmen Standorten - vorhanden. Hier muß aber der Einsatz von Rollrasen wie gesagt in den meisten Fällen ausscheiden.

Ein weiterer wichtiger Aspekt ist noch die Lager- und die Transportfähigkeit des bekannten Rollrasens, wobei auch hier Nachteile zu vermerken sind. Das durch den benötigten Mutterboden bedingte schwere Gewicht des Rollrasens beeinflußt nämlich die Transportfähigkeit zu einem gewünschten Einsatzort. Diese Beeinträchtigung ist sowohl unter dem Gesichtspunkt erhöhter Transportkosten als auch unter dem Aspekt der geringen Menge zu sehen, die wegen des hohen Gewichts jeweils nur transportiert werden kann. Außerdem ist eine Lagerung des fertigen Rollrasens nur über einen geringen Zeitraum möglich, weil der Mutterboden einer ausreichenden "Pflege" bedarf. Schließlich ist es bei einer Lagerung des Rollrasens erforderlich, diesen auszurollen, denn im zusammengerollten Zustand wird der Rollrasen nach einigen Tagen unbrauchbar. Somit stellt die Lagerhaltung im ausgerollten Zustand ein erhebliches platzproblem dar.

Die geschilderten Nachteile wiegen um so schwerer, alswie eingangs erläutert wurde - ein zunehmendes Bedürfnis an solchen Vegetationskörpern für unterschiedliche Anwendungsfälle besteht.

Durch die DE-A-2 321 362, von der die Erfindung gemäß dem Oberbegriff des Patentanspruchs 1 ausgeht, ist eine Erosionsschutzmatte bekannt, bei deren Anwendung davon ausgegangen wird, daß die Wurzeln der Pflanzen die Erosionsschutzmatte durchdringen, um die Erosionsschutzmatte so flächig auf dem Untergrund zu befestigen. Die pflanzen wachsen dabei also durch die Matte hindurch in den Untergrund, um ihr einen mechanischen Halt zu geben. Gleichzeitig finden die Wurzeln in dem Untergrund ihre Nahrung.

Die Anwendung dieser bekannten Erosionsschutzmatte setzt also einen Untergrund voraus, der ein Wachstum der Pflanzen ermöglicht. An den voranstehend erwähnten extremen Standorten lassen sich die bekannten Erosionsschutzmatten deshalb nicht einsetzen.

Der Erfindung liegt die Aufgabe zugrunde, einen Vegetationskörper zu schaffen, der trotz eines geringen Gewichtes einen stabilen Aufbau besitzt, so daß auch Anwendungsfälle in der vertikalen Lage möglich sind und der außerdem an extremen Standorten, wie sie durch künstliche Bauwerke vorgegeben sind, eingesetzt werden kann.

Dieses Ziel erreicht die Erfindung bei dem im Oberbegriff des Anspruchs 1 genannten Vegetationskörper durch die im kennzeichnenden Teil angegebenen Merkmale.

Aus der DE-A-1 801 460 ist zwar ein Rasen, insbesondere Fertigrasen für Sportplätze, bekannt, bei welchem eine Füllhöhe vorgesehen ist, die geringer als die Dicke einer Strukturmatte ist, allerdings wird dort kein strukturstabiles Substrat verwendet. Außerdem besteht bei dem bekannten Rasen noch die Voraussetzung, das bahnenförmige Trägermaterial auf einer vorbereiteten Freilandfläche auszulegen, die als Unterlage dient. Dadurch soll gewährleistet werden, daß die Wurzeln in die Unterlage eindringen können, um einen Halt zu finden. Gleichzeitig wirkt die Unterlage als Nährmedium. Für den Einsatz an extremen Standorten ist der bekannte Rasen daher nicht geeignet.

Ein bedeutsames Merkmal der Erfindung ist die Verwendung eines Substrats aus einem strukturstabilen Korngerüst und aus schwemmbaren Teilen bestehenden Substrats, mit welchem die mit einem Vlies unterlegte Strukturmatte teilweise unter Freilassung einer oberen Freizone verfüllt ist. Auf das Substrat können in zweckmäßiger Ausgestaltung der Erfindung z.B. Sporen als Moosvermehrungsorgane ausgebracht werden, so daß sich innerhalb der Freizone eine Moosschicht (Niedere Pflanzen) bildet. Daneben können auch Höhere Pflanzen verwendet werden. Das wachsende Moos preßt sich infolge des Dickenwachstums oben gegen die Strukturmatte und wächst später durch diese hindurch.

Der fertige Vegetationskörper wirkt im Endzustand - wenn also die Moosschicht gewachsen ist - in neuartige Weise als ein technisch-biologisches Armierungs- und Erosionsschutzsystem.

Die technische Armierung wird durch die Fäden oder Schlingen der Strukturmatte erreicht, welche die Kornteile des Substrats festhalten. Das unter der Strukturmatte befindliche Vlies verhindert eine Ausschwemmung nach unten.

Für die biologische Armierung ist der Umstand wichtig, daß die Strukturmatte nur teilweise unter Zurücklassung einer Freizone mit dem Substrat verfüllt wird. Die auf der Oberfläche des Substrats gewachsene Moosschicht wird nämlich oben durch die darüberliegenden Fäden bzw. Schlingen der Strukturmatte gehalten, so daß die Moosschicht eine biologische Armierung bewirkt. Durch ein vermehrtes Dickenwachstum der Moosschicht erfolgt nämlich ein gewisser Preßdruck, was insgesamt zu einem stabilen Verbund beiträgt.

An Stelle der Moosschicht können auch Höhere Pflanzen verwendet werden, wobei die biologische Armierung dann durch die Verwurzelung der Höheren Pflanzen erreicht wird, die bis auf die untere Vliesmatte durchwurzeln.

Bei dem neuen Vegetationskörper wird auf den schweren Mutterboden verzichtet; statt dessen wird ein strukturstabiles und relativ leichtes Substrat verwendet, wobei die Substratschicht zudem noch dünner als die Höhe der verwendeten Strukturmatte ist. Somit besitzt der neue Vegetationskörper ein sehr geringes Gewicht, während die bekannten Rasenmatten schwerer sind.

Das geringe Gewicht sowie die technisch-biologische Armierung tragen dazu bei, daß der neue Vegetationskörper in sich selbsttragend ist. Daher sind ohne weiteres auch solche Anwendungsfälle denkbar, in denen der Vegetationskörper eine senkrechte Lage einnehmen muß, beispielsweise als "Außenhaut" bei einer Lärmschutzwand.

Die weiter oben erwähnte Aufgabe der Erfindung wird außerdem durch einen Vegetationskörper mit den Merkmalen des Patentanspruchs 8 gelöst, wobei von einem Vegetationskörper mit einer Schlingmatte, einer Steinwollmatte und einem Substrat ausgegangen wird.

In seinem Oberbegriff geht der Patentanspruch 8 von der Druckschrift EP-A-100 374 aus, die einen mehrschichtigen, schallabsorbierenden, mit schüttungsresistenten Pflanzen bewachsenen Aufbau betrifft. Ein solcher Aufbau wird als Lärmschutzwand verwendet, betrifft also keinen Vegetationskörper im Sinne der Erfindung. Zwar ist bei dem bekannten Aufbau einer Lärmschutzwand die Verwendung von Steinwollmatten vorgesehen, jedoch ist die bekannte Lärmschutzwand nicht zum Einsatz an extremen Standorten geeignet.

Bei der Herstellung des erfindungsgemäßen Vegetationskörpers erfolgt die Kultivierung bis zum Endzustand in einer waagerechten Lage, bis die Vegetationsdecke geschlossen ist.

Die Vegetation (Niedere und/oder Höhere Pflanzen) erhalten in der Kultivierungsphase eine sogenannte Streßkonditionierung. Das bedeutet, daß die Pflanzen schon bei der Fertigstellung des Vegetationskörpers auf einen späteren Wassermangelstandort (extremer Standort) vorbereitet werden, indem sie in bestimmten Rhythmen nicht bewässert werden und die Pflanzen steigende Salzgaben, insbesondere Koch- und Kalisalze sowie Salicylsäure erhalten. Durch die neue Maßgabe der Salzgaben werden in den Pflanzen physiologische Vorgänge ausgelöst, welche die Anpassungshärte der Streßkonditionierung kennzeichnen. Dies sind besondere Stoffeinlagerungen, Verdickungen des Zellsaftes, Skelettverstärkung und Verdickung der Außenhaut (Cuticula).

Insgesamt bewirkt die Streßkonditionierung durch Salze, daß der Vegetationskörper auch an extremen Standorten mit Wassermangel existieren kann. Dadurch wird der bedeutende Vorteil erzielt, daß sich Vegetationskörper auch bei bisher nicht möglichen Anwendungsgebieten einsetzen lassen.

Die Erfindung betrifft ferner noch ein Substrat gemäß dem Oberbegriff des Patentanspruchs 9, welches sich durch die im kennzeichnenden Teil angegebenen Merkmale auszeichnet.

Durch die DE-A-2 335 685, welche eine Grünverbauung von Bauflächen und ein Verfahren zur Durchführung derselben betrifft, ist zwar an sich ein Substrat bekannt, jedoch weichen die Substratkomponenten völlig von den kennzeichnenden Merkmalen des Patentanspruchs 9 ab.

Bei der Erfindung wird ein strukturstabilisiertes, feuchtigkeitsanziehendes Substrat in Form eines Gemenges aus mineralischen, organischen, chemischen und synthetischen Bestandteilen verwendet. Dieses Substrat besitzt folgende Eigenschaften: hohe Eigenklebewirkung, hohe Erosionsfestigkeit, höhere Wasseraufnahmefähigkeit für Luftfeuchtigkeit als natürlicher Boden, hoher pH-Wert, nährstoffarm, Fähigkeit zur begrenzten Streusalzkompensation.

Ein wesentliches Merkmal besteht entgegen dem bisherigen gärtnerischen Fachwissen darin, daß dem Substrat geringe Mengen von modifiziertem Mörtel beigemischt werden. An sich hat man bisher die Verwendung von Mörtel wegen der Giftigkeit stets ganz konsequent und bewußt vermieden. Bei der Erfindung wird der Mörtel so modifiziert bzw. die für die Modifizierung verwendeten Stoffe sind so gewählt, daß die Giftigkeit des Mörtels für Pflanzen verringert ist. Durch den Mörtel erhält das Substrat eine hygrophile Eigenschaft, was den Einsatz an extremen wasserarmen Standorten ermöglicht.

Luftfeuchtigkeit, insbesondere wie sie bei nächtlicher Kühle auftritt, kann durch die Quellmechanismen der Moose verwertet werden. Die Moose leiten tropfenförmiges Überschußwasser an das hygrophile Substratgemisch weiter, wo es auch die Höheren Pflanzen nutzen können.

Bedingt durch die sich gegenseitig unterstützenden und verstärkenden Faktoren "Substrat" - "Pflanze" - "Stresskonditionierung" halten die erfindungsgemäßen Vegetationskörper relativ hohe Temperaturen bis zu 70°C aus. Dies ist ein besonderer Vorteil, weil sich die Vegetationskörper dann etwa auch auf Dachflächen (waagerecht oder auch schräg geneigt) verwenden lassen, wo Oberflächentemperaturen bis zu 70°C auftreten können. Dabei stellt sich bei den Moosen eine Trockenruhe ein.

Wegen des relativ geringen Gewichtes und wegen der hohen mechanischen Stabilität bzw. Festigkeit ist der erfindungsgemäße Vegetationskörper ohne problem leicht transportabel und auch lagerfähig, und zwar - was ein weiterer Vorteil ist im trockenen und aufgerollten Zustand.

Die Lagerfähigkeit bzw. die Lagerdauer kann etwa doppelt so lang wie bei einem Rollrasen sein, ohne daß der Vegetationskörper leidet. Somit sind auch längere Transportwege auf einfach Weise zu bewältigen, was ein wichtiger wirtschaftlicher Aspekt ist. Auch kann der Lagerraum relativ gering gehalten werden, da es nicht erforderlich ist, den Vegetationskörper im ausgerollten Zustand zu lagern.

Insgesamt bietet der neue Vegetationskörper also eine Reihe bedeutsamer Vorteile gegenüber dem bekannten Rollrasen. Bei geringstem Gewicht läßt sich eine größtmögliche Stabilität sowie eine maximale Begrünung erzielen. Der erfindungsgemäße Vegetationskörper kann somit vorteilhaft als Vegetationsschicht auf natürlichen und künstlichen Standorten, insbesondere auch auf extremen Standorten (Wassermangelstandorte) verwendet werden, und zwar sowohl horizontal als auch vertikal. Als Anwendungsgebiete kommen beispielsweis ein Frage: Dächer (auch geneigt), Lärmschutzwände oder künstliche Mauerbauwerke schlechthin.

Andere vorteilhafte Ausgestaltungen der Erfindung sind den Unteransprüchen zu entnehmen und in der Zeichnung dargestellt.

Nachfolgend wird die Erfindung an Hand der in der Zeichnung zu erkennenden Ausführungsbeispiele näher erläutert.

Es zeigen:

Fig. 1 eine Querschnittsansicht eines Vegetationskörpers mit einer Schlingmatte, und

Fig. 2 eine weitere Querschnittsansicht eines Vegetationskörpers mit einer Schlingmatte und mit einer Steinwollmatte.

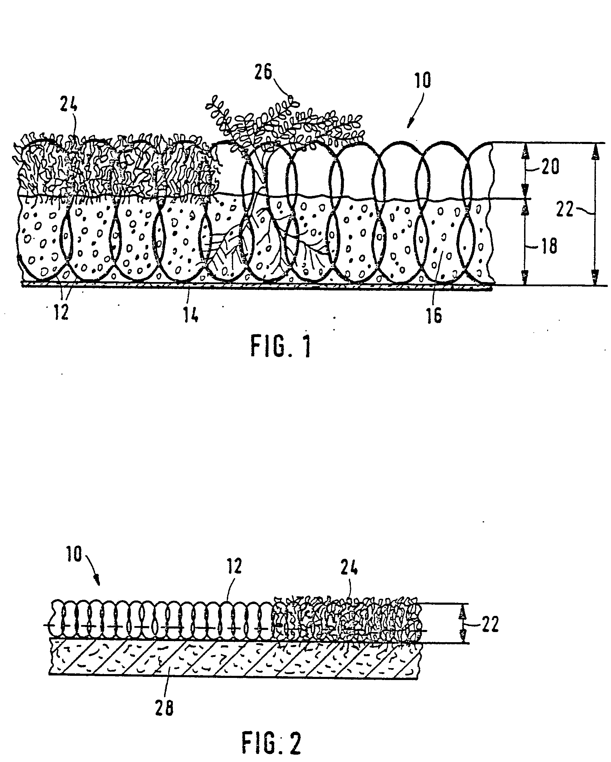

Der in Fig. 1 dargestellte Vegetationskörper 10 umfaßt eine an sich bekannte Schlingmatte 12, die mit einer porösen Unterlage 14 unterlegt ist. In dem gezeigten Ausführungsbeispiel ist die poröse Unterlage durch ein an sich bekanntes Vlies 14 gebildet, welche mittels nicht dargestellter Klammern an der Schlingmatte 12 befestigt ist. Anstelle des Vlieses 14 kann als poröse Unterlage übrigens auch eine Folie verwendet werden.

Die Schlingmatten 12 stehen im aufgerollten Zustand zur Verfügung. Bekanntlich besitzt eine Schlingmatte 12 eine Vielzahl von z.B. Kunststoff-Fäden oder dergleichen, die eine Struktur bilden und zwischen sich Zwischenräume bilden. Die Dicke bzw. Höhe der Schlingmatte 12 kann etwa 10 mm betragen. Anstelle der Schlingmatte 12 kann als Strukturmatte bei der Erfindung auch eine Gewebemate verwendet werden.

Die Schlingmatte 12 wird mit einem strukturstabiliziertem Substrat 16 verfüllt, wobei die Füllhöhe 18 geringer als die Höhe 22 der Schlingmatte 12 ist. Es verbleibt also eine obere Freizone 20.

Für die Herstellung des fertigen Vegetationskörpers 10 ist eine Vorkultivierung erforderlich, und zu diesem Zweck werden die Vermehrungsorgane von Niederen und/oder Höheren Pflanzen auf das Substrat 16 aufgebracht.

In dem Ausführungsbeispiel der Zeichnung sind sowohl Niedere Pflanzen als auch Höhere Pflanzen bzw. die entsprechenden Vermehrungsorgane in Form von Sporen, Samen und als Sproßteilform auf das Substrat 16 aufgebracht. Es bildet sich dann eine Moosschicht 24, und außerdem wachsen Höhere Pflanzen 26.

Während der Kultivierungsphase erfolgt die weiter oben schon erwähnte Stresskonditionierung, so daß der Vegetationskörper 10 auch an extremen Standorten einsetzbar ist.

Die Kultivierung des Vegetationskörpers 10 kann übrigens auch direkt an dem gewünschten Anwendungsort erfolgen.

Wie schon die Schlingmatte 12 selbst ist auch der fertige Vegetationskörper 10 bei Bedarf aufrollbar, wodurch ein problemloser Transport zum Einsatzort möglich ist.

Das verwendete Substrat 16 setzt sich in einem Ausführungsbeispiel wie folgt zusammen:

50% bindige Bestandteile (z.B. Ton oder Lehm)

15% poröses, haufwerkporiges Gestein (Lava oder Schlacke)

15% festes kalkhaltiges Gestein (z.B. Kalkstein oder Dolomit); Körnung ca. 5-15 mm

10% Humusbestandteile (z.B. Rindenhumus oder Torf)

10% sandiger Oberboden (Mutterboden), entseucht.

Die voranstehenden Angaben sind wie gesagt nur als ein Ausführungsbeispiel zu verstehen, und es sind im Rahmen der Erfindung durchaus Abweichungen möglich. Entscheidend ist, daß dem Substrat gemäß einer zweckmäßigen Ausgestaltung gewisse Mengen von modifiziertem Mörtel beigegeben werden.

Das gemäß der Erfindung verwendete Substrat 16 besitzt unter anderem eine Fähigkeit zur begrenzten Streusalzkompensation. Dies ist ein wichtiger Gesichtspunkt, denn im Winter werden Straßen und Wege aus Sicherheitsgründen häufig mit Streusalz behandelt. Während die Pflanzen darunter normalerweise leiden, ist dies bei dem erfindungsgemäßen Vegetationskörper ohne schädliche Nebenwirkungen.

Das Vlies, mit welchem die Schlingmatte 12 unterlegt ist, bietet einen Schutz gegen das Herausfallen von Feinteilen. Außerdem bewirkt das Vlies 14 einen Ausgleich von eventuellen Unebenheiten des Unterbodens.

Eine neue Erkenntnis der Erfindung liegt darin, daß das Vlies 14 auch eine dränende Wirkung, und zwar eine flächendränende Wirkung besitzt. Das Vlies 14 führt nämlich Uberschußwasser ab, und zwar innerhalb des Vlieses; es wirkt somit als eine "Wasserführung". In trockenen Jahreszeiten hält das Vlies 14 geringe Mengen von Wasserdampf zurück, so daß Feuchtigkeit für die Pflanzen zur Verfügung steht. Die Dicke des Vlieses 14 welches auch als Filterflies bezeichnet werden kann - kann 2 mm und mehr betragen.

Bei dem in Fig. 2 gezeigten Ausführungsbeispiel eines Vegetationskörpers 10 befindet sich unter der Schlingmatte 12 eine Steinwollmatte 28, deren Dicke etwa 0,5-3 cm betragen kann. Das zuvor schon erwähnte Substrat 16 besitzt ein Korngerüst für die Strukturstabilisierung und enthält daneben schwemmbare Teile. Diese schwemmbaren Teile sind in die Steinwollmatte 28 eingeschwemmt, so daß die so zubereitete Steinwollmatte 28 praktisch das Substrat 16 in Fig. 1 ersetzt, wobei für die Steinwollmatte 28 auch andere Mineralwollmatten verwendet werden können.

Bei diesem Ausführungsbeispiel befindet sich also innerhalb der Schlingmatte 12 kein Substrat, so daß die Niederen und/oder Höheren Pflanzen bzw. die entsprechenden Vermehrungsorgane (Samen, Sporen und Sproßteile) innerhalb der Schlingmatte 12 auf die Steinwollmatte aufgebracht werden, und zwar mit einer geringeren Höhe als die Höhe 22 der Schlingmatte 12, wobei die Höhe 22 hier etwa 10 mm betragen kann.

Es hat sich gezeigt, daß bei dieser Lösung vorzugsweise die Moose besonders gut wachsen.

Gegebenenfalls kann die Steinwollmatte 28 noch mit einer porösen Unterlage unterlegt sein.

## Patentansprüche

1. Vegetationskörper mit einer Strukturmatte (12), insbesondere mit einer Schlingmatte, wobei die Strukturmatte (12) mit einer porösen Unterlage (14) unterlegt und mit einem Substrat (16) verfüllbar ist, dadurch gekennzeichnet, daß das Substrat (16) aus einem strukturstabilen Korngerüst und aus schwemmbaren Teilen besteht, wobei die Füllhöhe (18) geringer als die Dicke bzw. Höhe (22) der Strukturmatte (12) ist, so daß eine Freizone (20) verbleibt, und daß die Freizone (20) mit Höheren (26) und/oder Niederen Pflanzen (24) ausgefüllt ist.

2. Vegetationskörper nach Anspruch 1, dadurch gekennzeichnet, daß dem strukturstabil ausgebildeten Substrat (16) eine geringe Menge modifizierter Mörtel beigemischt ist.

3. Vegetationskörper nach Anspruch 1 oder 2, dadurch gekennzeichnet, daß die Freizone (20) mit einer Moosschicht (24) ausgefüllt ist.

4. Vegetationskörper nach einem der vorhergehenden Ansprüche 1-3, dadurch gekennzeichnet, daß die Strukturmatte (12) eine dreidimensionale Schlingmatte ist.

5. Vegetationskörper nach einem der vorhergehenden Ansprüche 1-3, dadurch gekennzeichnet, daß die Strukturmatte (12) eine dreidimensionale Gewebematte ist.

6. Vegetationskörper nach einem der vorhergehenden Ansprüche 1-5, dadurch gekennzeichnet, daß die poröse Unterlage (14) mittels Klammern an der Strukturmatte (12) befestigt ist.

7. Vegetationskörper nach einem der vorhergehenden Ansprüche 1-6, dadurch gekennzeichnet, daß die poröse Unterlage (14) durch ein Vlies gebildet ist.

8. Vegetationskörper mit einer Schlingmatte, einer Steinwollmatte und einem Substrat, dadurch gekennzeichnet, daß die Steinwollmatte (28) unter der Schlingmatte (12) angeordnet ist, daß in die Steinwollmatte (28) die schwemmbaren Teile des Substrats (16) eingeschwemmt sind, und daß die Schlingmatte (12) in ihrer Höhe (22) zumindest teilweise mit Höheren (26) und/oder Niederen Pflanzen (24) ausgefüllt ist.

9. Substrat für einen Vegetationskörper nach einem oder mehreren der Ansprüche 1-8, wobei das Substrat Steine, Torf und Erde umfaßt, dadurch gekennzeichnet, daß das Substrat die nachfolgenden Bestandteile (Angaben in Volumenprozenten) enthält:

50% bindige Bestandteile (z.B. Ton oder Lehm

15% poröses, haufwerkporiges Gestein (Lava oder Schlacke)

15% festes kalkhaltiges Gestein (z.B. Kalkstein oder Dolomit); Körnung ca. 5-15 mm

10% Humusbestandteile (z.B. Rindenhumus oder Torf)

10% sandiger Oberboden (Mutterboden), entseucht.

## Revendications

1. Corps de végétation avec une natte structurée (12), en particulier une natte bouclée, la natte structurée (12) étant revêtue d'une sous-couche poreuse (14) et pouvant être remplie d'un substrat (16), caractérisé en ce que le substrat (16) est constitué d'une ossature granuleuse à structure stable et de parties flottables, la hauteur de remplissage (18) étant inférieure à l'épaisseur ou hauteur (22) de la natte structurée (12) de façon qu'il reste une zone libre (20) et que cette zone libre (20) soit remplie de plantes hautes (26) et/ou de plantes basses (24).

2. Corps de végétation suivant la revendication 1, caractérisé en ce qu'une faible quantité de mortier modifié est mélangé au substrat (16) formé à structure stable.

3. Corps de végétation suivant la revendication 1 ou 2, caractérisé en ce que la zone libre (20) est remplie d'une couche de mousse (24).

4. Corps de végétation suivant une des revendications précédentes 1 à 3, caractérisé en ce que la natte structurée (12) est une natte bouchée tridimensionnelle.

5. Corps de végétation suivant une des revendications précédentes 1 à 3, caractérisé en ce que la natte structurée (12) est une natte textile tridimensionnelle.

6. Corps de végétation suivant une des revendications précédentes 1 à 5, caractérisé en ce que la sous-couche poreuse (14) est fixée à la natte structurée (12) au moyen d'agrafes.

7. Corps de végétation suivant une des revendications précédentes 1 à 6, caractérisé en ce que la sous-couche poreuse (14) est constituée d'un non-tissé.

8. Corps de végétation avec une natte bouclée, une natte de laine minérale et un substrat, caractérisé en ce que la natte de laine minérale (28) est sous la natte bouclée (12), que les éléments déposables du substrat (16) sont déposés dans la natte de laine minérale, et que l'épaisseur (22) de la natte bouclée (12) est au moins partiellement remplie de plantes hautes (26) et/ou de plantes basses (24).

9. Substrat pour corps de végétation suivant une ou plusieurs des revendications 1 à 8, le substrat comprenant des pierres, de la tourbe et de la terre, caractérisé en ce que le substrat contient les composants suivants (indications en pourcentages de volume):

50% de composants glaiseux (par exemple argile ou limon)

15% de roche poreuse, de texture caverneuse (lave ou scorie)

15% de roche chargée en calcaire solide (par ex. pierre à chaux ou dolomie) d'une granulométrie de grain d'environ 5 - 15 mm

10% de composants d'humus (par ex. humus d'écorce ou tourbe)

10% de support de culture sableux (terreau), désinfecté.

**Claims**

1. Vegetation body comprising a fabric mat (12), especially comprising a looped mat, wherein the fabric mat (12) is underlain with a porous underlay (14) and can be filled with a substrate (16), characterized in that the substrate (16) consists of a structurally stable granular framework and of floatable particles, the filled level (18) being smaller than the thickness or height (22) of the fabric mat (12), so that a free zone (20) remains, and that the free zone (20) is filled with higher (26) and/or lower plants (24).

2. Vegetation body according to Claim 1, characterized in that a small quantity of modified mortar is admixed to the structurally stable substrate (16).

3. Vegetation body according to Claim 1 or 2, characterized in that the free zone (20) is filled with a moss layer (24).

4. Vegetation body according to one of the preceding Claims 1 to 3, characterized in that the fabric mat (12) is a three-dimensional looped mat.

5. Vegetation body according to one of the preceding Claims 1 to 3, characterized in that the fabric mat (12) is a three-dimensional woven mat.

6. Vegetation body according to one of the preceding Claims 1 to 5, characterized in that the porous underlay (14) is secured to the fabric mat (12) by means of clips.

7. Vegetation body according to one of the preceding Claims 1 to 6, characterized in that the porous underlay (14) is formed of a non-woven.

8. Vegetation body comprising a looped mat, a rock wool mat and a substrate, characterized in that the rock wool mat (28) is disposed beneath the looped mat (12), that the floatable particles of the substrate (16) are floated into the rock wool mat (28), and that the looped mat (12) is filled in its height (22) at least partly with higher (26) and/or lower plants (24).

9. Substrate for a vegetation body according to one or more of Claims 1 to 8, wherein the substrate comprises stones, peat and soil, characterized in that the substrate contains the following constituents (in percent by volume):

50% cohesive constituents (e.g. clay or loam)

15% porous, internally porous rock (lava or slag)

15% solid, lime-containing rock (e.g. limestone or dolomite); particle size approx. 5-15 mm

10% humus constituents (e.g. bark humus or peat)

10% sandy topsoil (original soil), sterilized.

FIG. 1

FIG. 2